# EUROPÄISCHE PATENTSCHRIFT

(11) **EP 2 188 503 B1**
(45) Veröffentlichungstag und Bekanntmachung des Hinweises auf die Patenterteilung: **20.06.2012**
(21) Anmeldenummer: 08786599.4
(22) Anmeldetag: 30.07.2008
(51) Int. Cl.: F01N 3/28, B23K 1/00, C23C 8/14

(54) **VERFAHREN ZUR ERZEUGUNG EINER OXIDSCHICHT AUF EINER METALLISCHEN FOLIE, FOLIE MIT OXIDSCHICHT UND DARAUS HERGESTELLTER WABENKÖRPER**
METHOD FOR GENERATING AN OXIDE LAYER ON A METALLIC FOIL, FOIL HAVING AN OXIDE LAYER AND HONEYCOMB BODY PRODUCED IN THIS WAY
PROCÉDÉ DE PRODUCTION D'UNE COUCHE D'OXYDE SUR UNE FEUILLE MÉTALLIQUE, FEUILLE AVEC COUCHE D'OXYDE ET CORPS EN NID D'ABEILLES AINSI FABRIQUÉ

(30) Priorität: 07.09.2007 DE 102007042618
(43) Veröffentlichungstag der Anmeldung: 26.05.2010
(73) Patentinhaber: Emitec Gesellschaft für Emissionstechnologie mbH, 53797 Lohmar (DE)
(72) Erfinder: ALTHÖFER, Kait, 51674 Wiehl (DE); HODGSON, Jan, 53840 Troisdorf (DE); SCHEPERS, Sven, 53844 Troisdorf (DE)
(74) Vertreter: Rössler, Matthias
(86) Internationale Anmeldenummer: PCT/EP2008/059964
(87) Internationale Veröffentlichungsnummer: WO 2009/033882

(56) Entgegenhaltungen:
- EP-A- 0 204 423
- EP-A- 0 283 910
- EP-A- 0 437 626
- EP-A- 0 559 907
- WO-A-01/66300
- WO-A-95/21022
- US-A- 5 529 759

## Beschreibung

Die vorliegende Erfindung betrifft die Herstellung und Anwendung einer metallischen Folie aus einem hochtemperatur-korrosionsfesten Stahl, wobei die Folie an ihren Oberflächen mit einer Oxidschicht versehen ist.

Es ist seit langem bekannt, dass metallische Folien bei der Herstellung von Wabenkörpern, insbesondere für Abgassysteme von Verbrennungskraftmaschinen, eingesetzt werden. Wegen der hohen Temperaturen bei solchen Anwendungen werden meist chrom- und aluminiumhaltige Stähle eingesetzt. Typische Folien haben eine Dicke von 20 bis 180 µm (Mikrometer), insbesondere im Bereich von 30 bis 120 µm, und werden durch Walzen hergestellt. Insbesondere bei der Verwendung solcher Folien für metallische Wabenkörper und andere Komponenten zur Abgasreinigung müssen auch besondere Anforderungen an die Oberfläche gestellt werden. Die Eigenschaft der Hochtemperatur-Korrosionsfestigkeit ergibt sich gerade daraus, dass sich an der Oberfläche solcher Folien eine schützende Oxidschicht bildet, die bei aluminiumhaltigen Stählen hauptsächlich aus Aluminiumoxid, insbesondere γ-Aluminiumoxid, besteht.

Im Allgemeinen werden aus metallischen Folien hergestellte Wabenkörper in Abgassystemen mit einem katalytisch aktiven Material beschichtet, welches in der Form eines so genannten Washcoat aufgetragen wird. Hier muss die schützende Oxidschicht auf der Folie zusätzlich eine gute Haftung der zusätzlichen Beschichtung ermöglichen. Schließlich ist noch eine weitere Problematik zu berücksichtigen, nämlich die Verbindungstechnik, die bei der Herstellung von Wabenkörpern aus metallischen Folien für die Stabilität der Wabenkörper verantwortlich ist. Langjährige Erfahrungen haben gezeigt, dass in einem Wabenkörper, der aus unterschiedlich strukturierten Folien hergestellt wird, nicht alle Berührungsstellen zwischen den Folien miteinander verbunden werden sollten, sondern Verbindungen nur in ausgewählten Bereichen sinnvoll sind, da nur auf diese Weise gleichzeitig hohe Stabilität und Elastizität bei thermischen Wechselbelastungen gewährleistet werden können. Als Verbindungstechnik kommt insbesondere das Hartlöten, vorzugsweise Hochtemperatur-Vakuumlöten, in Betracht. Metallische Folien verbinden sich bei hoher Temperatur an ihren Berührungsstellen jedoch auch abhängig von verschiedenen Parametern durch Diffusionsverbindungen miteinander. Dies kann gezielt zur Herstellung von Verbindungen genutzt werden, kann jedoch auch erheblich stören, wenn bestimmte Berührungsbereiche gerade nicht miteinander verbunden werden sollen. Auch für diese Vorgänge spielt die Oxidschicht auf den Folien eine wichtige Rolle, da bei sehr dicken Oxidschichten weder gute Lötverbindungen noch Diffusionsverbindungen erzielt werden können, während bei sehr dünnen Oxidschichten nicht nur gute Lötverbindungen, sondern auch an allen Berührungsstellen Diffusionsverbindungen entstehen können.

Aufgabe der vorliegenden Erfindung ist es daher, die bekannten Techniken zumindest teilweise zu verbessern, wobei insbesondere eine metallische Folie mit Oxidschicht angegeben werden soll, die geeignete Eigenschaften für die Herstellung eines Wabenkörpers, insbesondere für die beschriebenen Anwendungen, aufweist. Außerdem soll ein Verfahren zur Herstellung solcher Folien angegeben werden. Auch ein aus solchen Folien hergestellter Wabenkörper ist Gegenstand der vorliegenden Erfindung.

Zur Lösung dieser Aufgaben dient ein Wabenkörper gemäß dem Anspruch 1, eine Folie gemäß dem Anspruch 11 sowie ein Verfahren zur Herstellung einer Oxidschicht auf einer Folie gemäß dem Anspruch 12. Vorteilhafte Ausgestaltungen sind in den jeweils abhängigen Ansprüchen angegeben.

Ein erfindungsgemäßer Wabenkörper, insbesondere Katalysator-Trägerkörper, enthält mindestens eine metallische Folie aus einem hochtemperatur-korrosionsfesten Stahl, wobei die Folie zumindest in manchen Bereichen Verbindungsstellen aufweist. Diese Folie hat an ihren Oberflächen jeweils eine Oxidschicht mit einer Dicke von 60 bis 80 nm (Nanometer), vorzugsweise 70 bis 75 nm.

Dieser Dickenbereich hat sich als besonders günstig für die Herstellung von Wabenkörpern mit den gewünschten Eigenschaften, insbesondere für die Anwendung in Abgasanlagen von Kraftfahrzeugen, erwiesen. In solchen Wabenkörpern werden typischerweise unterschiedlich strukturierte Folien aufeinander geschichtet und/oder gewickelt, wobei die Oxidschicht nach Möglichkeit die mechanischen Herstellungsschritte nicht negativ beeinflussen soll. Im geschichteten bzw. gewickelten Wabenkörper gibt es Berührungsstellen zwischen den geschichteten bzw. gewickelten Folien und/oder zwischen Folien und anderen Bauteilen, beispielsweise einem Mantelrohr oder einem metallisch ummantelten Sensor. Mittels verschiedener bekannter Verfahren können in manchen Bereichen die Berührungsstellen zu festen Verbindungsstellen gemacht werden, beispielsweise durch Aufbringen von Hartlot (in fester oder flüssiger Form) und anschließendes Erhitzen. Die entstehenden hartgelöteten Verbindungen werden durch eine Oxidschicht der erfindungsgemäßen Dicke nicht wesentlich verschlechtert. Andererseits verhindert diese Oxidschicht, dass sich an Berührungsstellen, die nicht verbunden werden sollen, bei der Erhitzung des Wabenkörpers unerwünschte Diffusionsverbindungen ausbilden. Dafür ist die Oxidschicht dick genug, so dass die gewünschte selektive Herstellung von Verbindungsstellen durch die Oxidschicht stark begünstigt wird. Zu diesem Zweck können die beiden flächigen Oberflächen der Folie (ggf. aber auch nur eine davon) wenigstens teilweise - bevorzugt aber vollständig - mit der hier vorgeschlagenen Oxidschicht versehen sein, insbesondere aber jedenfalls in den Berührstellen der benachbarten Folien im Rahmen der Herstellung des Wabenkörpers.

Bevorzugt ist, dass die metallische Folie aus einem Stahl mit Chrom- und Aluminiumanteilen besteht, insbesondere auf Stähle mit Aluminiumgehalten von 1 bis 5 % [Gewichtsprozent]. Ein Aluminiumgehalt bis zu 5 % ist ohne wesentliche Nachteile für die sonstigen Eigenschaften einer Folie besonders günstig für die Hochtemperatur-Korrosionsfestigkeit.

Die Oxidschicht besteht im Wesentlichen aus Aluminiumoxid, insbesondere γ-Aluminiumoxid.

Erfmdungsgemäß ist es von besonderem Vorteil, wenn die Oxidschicht auf allen Oberflächen in dem Wabenkörper eine etwa gleichmäßige Dicke mit einer Toleranz von weniger als 10 %, vorzugsweise weniger als 5 %, aufweist. Bei der gezielten selektiven Herstellung von Verbindungsstellen und der gezielten Verhinderung von Verbindungen in anderen Bereichen kann es erforderlich sein, dass überall an den Berührungsstellen ähnliche Bedingungen herrschen, weshalb eine geringe Toleranz der Oxidschicht von Vorteil ist.

Für die Herstellung von Lötverbindungen kommt es auch darauf an, dass Lot, welches beispielsweise in Pulverform in bestimmten Bereichen aufgebracht wird, sich über einen kleinen Umgebungsbereich durch Fließen verteilen kann, wenn die Schmelztemperatur erreicht wird. Die Fließ- und Benetzungseigenschaften eines Lotes auf einer Oberfläche hängen nicht nur von der Oxidschicht, sondern auch von der Oberflächenrauhigkeit des verwendeten Materials ab. Auch beeinflusst die Oberflächenrauhigkeit die Wahrscheinlichkeit einer Bildung von Diffusionsverbindungen. Als vorteilhaft hat sich eine relativ raue Oberfläche gezeigt, mit einer mittleren Oberflächenrauhigkeit von mehr als 0,3 µm (Mikrometer). Bei den angegebenen Rauhigkeitswerten handelt es sich um arithmetische Mittelwerte der Rauhigkeit, meist mit Rₐ abgekürzt, wie sie nach dem Tastschnittverfahren gemessen werden. Dieses Verfahren ist beispielsweise beschrieben in dem Artikel "Rauheitsmessung an gewalzten Feinblechen" in der Zeitschrift "Stahl und Eisen 109" (Jahrgang 1989 Nr. 12, S. 589 und 590).

Besonders geeignet sind im Zusammenhang mit der vorliegenden Erfindung gewalzte Folien, deren Oberflächenrauhigkeit in Walzrichtung und/oder in Querrichtung dazu, eine mittlere Oberflächenrauhigkeit von mehr als 0,3 µm, vorzugsweise mehr als 0,5 µm, besonders bevorzugt mehr als 0,6 µm, aufweisen. Bei diesen Rauhigkeiten in Verbindung mit der erfindungsgemäßen Oxidschicht ergeben sich besonders günstige Eigenschaften zum Verarbeiten, Löten, Verhindern von Diffusionsanbindungen und der Hochtemperatur-Korrosionsfestigkeit.

Ihre besonderen Vorteile entfalten die beschriebenen Eigenschaften insbesondere, wenn die Verbindungsstellen in einem erfindungsgemäßen Wabenkörper durch Hartlöten, insbesondere Hochtemperatur-Vakuumlöten, hergestellt sind. Trotz der hohen Temperatur bei diesem Lötverfahren entstehen nur wenige bzw. schwache Diffusionsverbindungen in den nicht gelöteten Bereichen.

Die Eigenschaft der betrachteten Stahlfolien, an Berührungsstellen bei hoher Temperatur Diffusionsverbindungen zu bilden, und die Eigenschaft der erfindungsgemäßen Oxidschicht, solche Verbindungen zu verhindern, können auch dadurch bei der Herstellung eines Wabenkörpers sinnvoll genutzt werden, dass die Oxidschicht in bestimmten Bereichen, in denen Verbindungen gewünscht werden, entfernt wird. Bei einer beispielsweise in Streifenform vorgenommenen Entfernung der Oxidschicht bilden sich in einem späteren Wabenkörper gerade dort haltbare Diffusionsverbindungen, wo die Oxidschicht entfernt ist, während sich an anderen Berührungsstellen durch den Schutz der Oxidschicht keine oder nur schwache Verbindungen ausbilden. Auch auf diese Weise kann ein Wabenkörper mit den gewünschten Eigenschaften hergestellt werden.

Erfindungsgemäße Wabenkörper können nach ihrer Fertigstellung mit einer zusätzlichen Beschichtung auf den Oxidschichten versehen werden, insbesondere mit einem so genannten Washcoat und/oder katalytisch aktiven Materialien. Für Anwendungen bei der Abgasreinigung von Verbrennungskraftmaschinen sind in einer solchen zusätzlichen Beschichtung typischerweise Edelmetalle wie Platin oder Rhodium enthalten.

Entsprechend den obigen Ausführungen weist eine erfindungsgemäße Folie zur Herstellung eines metallischen Wabenkörpers auf ihren beiden Oberflächen eine Oxidschicht mit einer Dicke zwischen 60 und 80 nm auf, vorzugsweise zwischen 70 und 75 nm. Bevorzugt kann eine solche Folie die oben beschriebenen Rauhigkeiten aufweisen.

Hergestellt werden kann eine solche Folie gemäß der vorliegenden Erfindung durch Einwirkung einer Temperatur zwischen 750 und 800°C auf die Folie in Luft als Umgebungsatmosphäre für eine Zeit zwischen 4 und 8 Sekunden, vorzugsweise etwa 6 Sekunden. Dies kann z. B. im Durchlauf durch eine Glühstrecke oder in ähnlichen Verfahren erfolgen. Die beschriebenen Folien eignen sich zur Herstellung von Wabenkörpern praktisch aller bekannten Formen und Herstellungsverfahren, bei denen auch bisher Stahlfolien eingesetzt wurden.

Ein alternatives Herstellungsverfahren, welches bei Bedarf auch für andere Schichtdicken angewendet werden kann, ist das Aufbringen einer Oxidschicht der gewünschten Dicke durch Beschichten der Oberflächen der Folie mit Nanopartikeln, insbesondere aus Aluminiumoxid. Ein solches Verfahren kann gegenüber dem Erhitzen der Folie an Luft energetisch günstiger sein und qualitative Verbesserungen der Oxidschicht bewirken. Eine solche Beschichtung kann auch selektiv in bestimmten Bereichen erfolgen.

Zur Erläuterung der Erfindung und des technologischen Umfeldes dient auch die Zeichnung, die Ausführungsbeispiele und Anwendungen näher beschreibt, wobei die Erfindung jedoch nicht auf diese Beispiele beschränkt ist. Es zeigen schematisch:
- Fig. 1:: eine Ansicht eines Wabenkörpers,
- Fig. 2:: den Bereich einer Verbindungsstelle zwischen zwei Folien in einem Wabenkörper gemäß einer ersten Variante,
- Fig. 3:: ein anderes Beispiel einer Verbindungsstelle in einem Wabenkörper, und
- Fig. 4:: eine erfindungsgemäße Folie in einer schematischen, teilweise geschnittenen perspektivischen Darstellung.

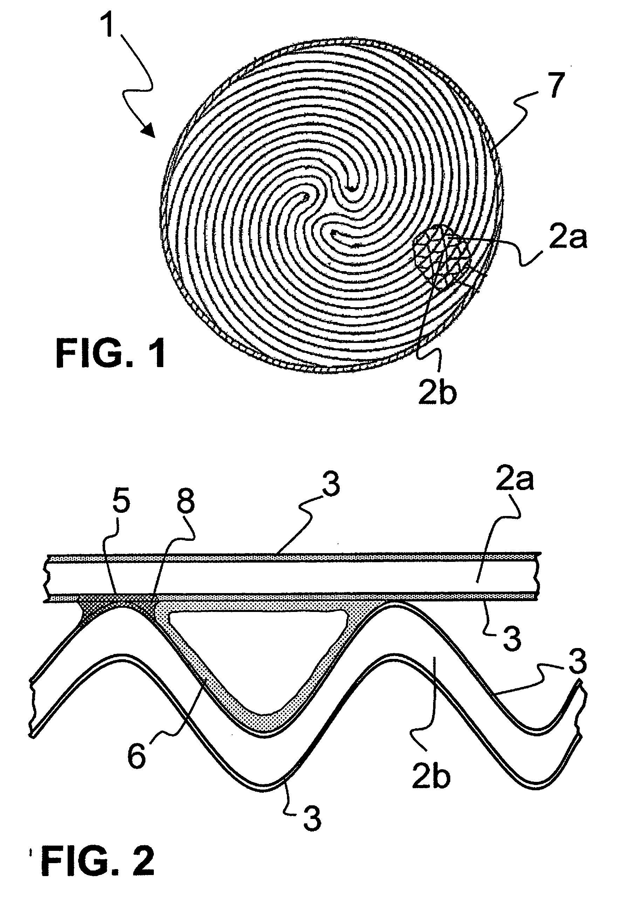

Fig. 1 zeigt schematisch in stirnseitiger Ansicht einen Wabenkörper 1, der aus glatten 2a und gewellten 2b metallischen Folien aufgebaut ist, die in einem Mantelrohr 7 angeordnet sind. Auf die genaue Form der Folienlagen kommt es im vorliegenden Fall nicht an. Die Erfindung kann auf praktisch alle bekannten Formen von metallischen Wabenkörpern angewendet werden.

Fig. 2 zeigt in einer schematischen Schnittansicht aneinander liegend eine glatte Folienlage 2a und eine gewellte Folienlage 2b. An einer Berührungsstelle dieser Folienlagen 2a, 2b ist eine Verbindungsstelle 5 durch Lot 8 ausgebildet. Obwohl erfindungsgemäß die Folienlagen 2a, 2b mit Oxidschichten 3 versehen sind, können durch Löten feste Verbindungsstellen 5 erzeugt werden. An Berührungsstellen ohne Lot entstehen jedoch keine Verbindungen, wie zum Vergleich bei einer benachbarten Berührungsstelle dargestellt ist. Die Situation in einem fertigen Wabenkörper ist schematisch durch die zusätzliche Beschichtung 6 angedeutet, die nach Fertigstellung eines Wabenkörpers typischerweise aufgebracht wird.

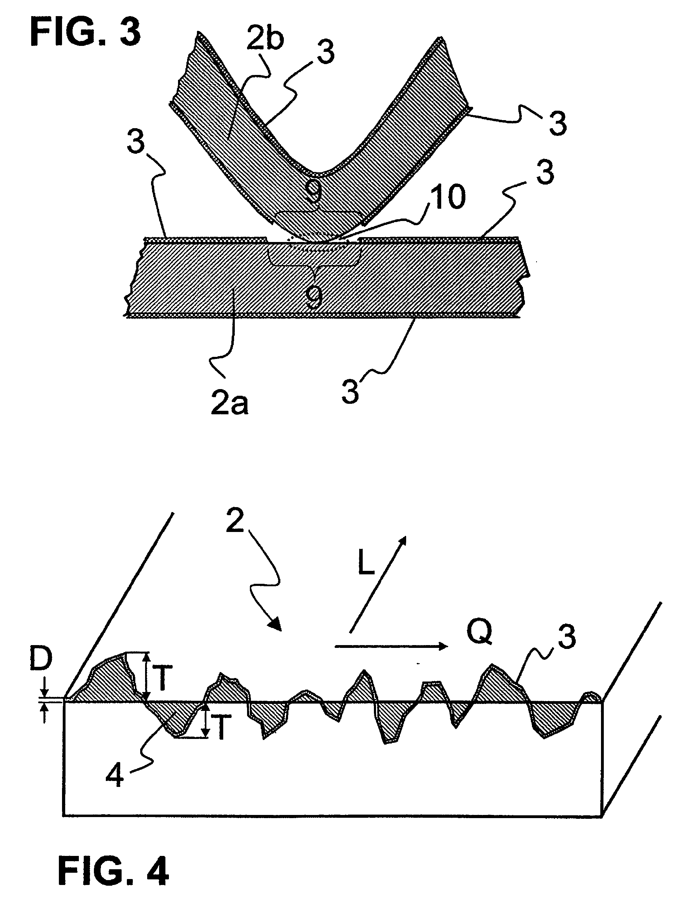

Fig. 3 zeigt die Situation einer Berührungsstelle zwischen einer glatten Folienlage 2a und einer gewellten Folienlage 2b, wenn in Teilbereichen 9 die Oxidschicht 3 von den Folienlagen 2a, 2b entfernt ist. In diesem Falle bildet sich eine Diffusionsverbindung 10 an der Berührungsstelle aus, wenn der Wabenkörper aufgeheizt wird.

Fig. 4 zeigt schematisch in einer teilweise geschnittenen perspektivischen Ansicht und maßstäblich übertrieben die Situation bezüglich Beschichtung und Rauhigkeit an der Oberfläche einer erfindungsgemäßen Folie 2. Solche Folien werden typischerweise in langen Bahnen durch Walzen hergestellt, wobei die Längsrichtung in Fig. 4 durch den Pfeil L angedeutet ist und der Walzrichtung entspricht. Quer dazu liegt die durch den Pfeil Q angedeutete Querrichtung, in der die Rauhigkeit schematisch dargestellt ist. Man erkennt, dass die Oxidschicht 3 mit der Dicke D eine kleine Dimension im Verhältnis zur Rauhigkeit der Oberfläche hat, also im Wesentlichen dem Verlauf der Oberflächenkontur folgt und diese nicht etwa ausgleicht. Die mittlere Oberflächenrauhigkeit ist schematisch durch die schraffierten Flächen angedeutet. An einer Folienoberfläche bilden sich Berge und Vertiefungen 4 unterschiedlicher Tiefe T bzw. Höhe aus, wobei die Oberflächenrauhigkeit einen Durchschnittswert der Abweichung dieser Berge und Täler von einem Mittelniveau angibt. Die Oberflächenrauhigkeit wird im Allgemeinen mit Rₐ bezeichnet. Es gibt verschiedene Möglichkeiten, die Rauhigkeit einer Folienoberfläche zu beeinflussen. So kann sie durch Polieren verringert und durch Bürsten oder Strahlen mit geeigneten Werkzeugen vergrößert werden. Der für die Erfindung besonders geeignete Rauhigkeitsbereich ist größer als übliche Werte beim Herstellen von Stahlfolien durch Walzen.

Die vorliegende Erfindung eignet sich besonders für die Herstellung von dauerhaltbaren hochtemperaturfesten Wabenkörpern für den Einsatz in Abgassystemen von Verbrennungskraftmaschinen, insbesondere bei Kraftfahrzeugen.

### Bezugszeichenliste

- 1: Wabenkörper
- 2: Folie
- 2a: glatte Blechlage
- 2b: gewellte Blechlage
- 3: Oxidschicht
- 4: Vertiefung
- 5: Verbindungsstelle
- 6: zusätzliche Beschichtung (Washcoat ggf. mit katalytisch aktivem Material)
- 7: Mantelrohr
- 8: Lot
- 9: Teilbereich frei von Oxidschicht
- 10: Diffusionsverbindung

- L: Längsrichtung (Walzrichtung)
- Q: Querrichtung
- T: Tiefe der Vertiefungen
- D: Dicke der Oxidschicht

## Patentansprüche

1. Wabenkörper (1), insbesondere Katalysator-Trägerkörper, enthaltend mindestens eine metallische Folie (2) aus einem hochtemperatur-korrosionsfesten Stahl, wobei die Folie (2) zumindest in manchen Bereichen Verbindungsstellen (5) aufweist und an ihren Oberflächen jeweils eine Oxidschicht (3) mit einer Dicke (D) von 60 bis 80 nm (Nanometer), vorzugsweise 70 bis 75 nm, aufweist.

2. Wabenkörper (1) nach Anspruch 1, **dadurch gekennzeichnet, dass** die metallische Folie (2) aus einem Stahl mit Chrom- und Aluminiumanteilen besteht, insbesondere mit 1 bis 5 % Aluminium.

3. Wabenkörper (1) nach Anspruch 1 oder 2, **dadurch gekennzeichnet, dass** die Oxidschicht (3) im Wesentlichen aus Aluminiumoxid, insbesondere γ-Aluminiumoxid, besteht.

4. Wabenkörper (1) nach einem der vorhergehenden Ansprüche, **dadurch gekennzeichnet, dass** die Oxidschicht (3) auf allen Oberflächen in dem Wabenkörper (1) eine gleichmäßige Dicke (D) mit einer Toleranz von weniger als 10 %, vorzugsweise weniger als 5%, aufweist.

5. Wabenkörper (1) nach einem der vorhergehenden Ansprüche, **dadurch gekennzeichnet, dass** die Folie (2) in mindestens einer Messrichtung eine mittlere Oberflächenrauhigkeit (Ra) von mehr als 0,3 µm (Mikrometer) aufweist.

6. Wabenkörper (1) nach einem der vorhergehenden Ansprüche, **dadurch gekennzeichnet, dass** die Folie (2) eine gewalzte Folie ist und mindestens in Walzrichtung (L), vorzugsweise in Walzrichtung (L) und auch in Querrichtung (Q) quer zur Walzrichtung, eine mittlere Oberflächenrauhigkeit (Ra) von mehr als 0,3 µm, vorzugsweise mehr als 0,5 µm, besonders bevorzugt etwa 0,6 µm, aufweist.

7. Wabenkörper (1) nach einem der vorhergehenden Ansprüche, **dadurch gekennzeichnet, dass** die Oxidschicht (3) aus Nanopartikeln besteht, die auf die Oberflächen der Folien aufgebracht sind.

8. Wabenkörper (1) nach einem der vorhergehenden Ansprüche, **dadurch gekennzeichnet, dass** die Verbindungsstellen (5) durch Hartlöten, insbesondere Hochtemperatur-Vakuumlöten, hergestellt sind.

9. Wabenkörper (1) nach Anspruch 8, **dadurch gekennzeichnet, dass** nicht gelötete Bereiche außerhalb der Verbindungsstellen (5) nicht oder nur schwach durch Diffusionsverbindungen miteinander verbunden sind.

10. Wabenkörper (1) nach einem der Ansprüche 1 bis 7, **dadurch gekennzeichnet, dass** die Oxidschicht (3) in Teilbereichen (9) um Verbindungsstellen (5) ganz oder teilweise entfernt bzw. nicht aufgebracht ist und dort Diffusionsverbindungen (10) vorhanden sind.

11. Wabenkörper (1) nach einem der vorhergehenden Ansprüche, **dadurch gekennzeichnet, dass** der Wabenkörper (1) mit einer zusätzlichen Beschichtung (6) auf den Oxidschichten (3) versehen ist, insbesondere einem so genannten Washcoat und/oder katalytisch aktiven Materialien.

12. Folie (2) zur Herstellung eines metallischen Wabenkörpers (1), insbesondere eine Katalysator-Trägerkörpers, **dadurch gekennzeichnet, dass** die Folie (2) auf ihren beiden Oberflächen eine Oxidschicht (3) aufweist mit einer Dicke (D) zwischen 60 und 80 nm (Nanometer), vorzugsweise zwischen 70 und 75 nm.

13. Verfahren zur Herstellung einer Oxidschicht mit einer Dicke (D) von 60 bis 80 nm (Nanometer) auf einer aluminiumhaltigen, hochtemperatur-korrosionsfesten Stahlfolie (2), **dadurch gekennzeichnet, dass** die Folie (2) in Luft als Umgebungsatmosphäre zwischen 4 und 8 s (Sekunden), vorzugsweise etwa 6 s, auf Temperaturen zwischen 750° und 800° C gehalten wird.

14. Verfahren zur Herstellung einer Oxidschicht mit einer Dicke (D) von 60 bis 80 nm (Nanometer) auf einer aluminiumhaltigen, hochtemperatur-korrosionsfesten Stahlfolie (2), **dadurch gekennzeichnet, dass** die Folie (2) mit Nanopartikeln, vorzugsweise aus Aluminiumoxid beschichtet wird.

## Claims

1. A honeycomb body (1), in particular a catalytic converter support body, comprising at least one metallic foil (2) formed of a high-temperature corrosion resistant steel, with the foil (2) having connecting points (5) at least in some regions and having on each of its surfaces an oxide coat (3) with a thickness (D) from 60 to 80 nm (nanometers), preferably 70 to 75 nm.

2. The honeycomb body (1) as claimed in claim 1, **characterized in that** the metallic foil (2) is composed of a steel with chromium and aluminum components, in particular with 1 to 5 % aluminum.

3. The honeycomb body (1) as claimed in claim 1 or 2, **characterized in that** the oxide coat (3) is composed substantially of aluminum oxide, in particular γ-aluminum oxide.

4. The honeycomb body (1) as claimed in one of the preceding claims, **characterized in that** the oxide coat (3) has a uniform thickness (D), with a tolerance of less than 10%, preferably less than 5%, on all surfaces in the honeycomb body (1).

5. The honeycomb body (1) as claimed in one of the preceding claims, **characterized in that** the foil (2) has a mean surface roughness (Rₐ) of greater than 0.3 µm (micrometers) in at least one measurement direction.

6. The honeycomb body (1) as claimed in one of the preceding claims, **characterized in that** the foil (2) is a rolled foil and has a mean surface roughness (Rₐ) of greater than 0.3 µm, preferably greater than 0.5 µm, particularly preferably approximately 0.6 µm, at least in the rolling direction (L), preferably in the rolling direction (L) and also in the transverse direction (Q) perpendicular to the rolling direction.

7. The honeycomb body (1) as claimed in one of the preceding claims, **characterized in that** the oxide coat (3) is composed of nanoparticles which are applied to the surfaces of the foils.

8. The honeycomb body (1) as claimed in one of the preceding claims, **characterized in that** the connecting points (5) are produced by brazing, in particular high-temperature vacuum brazing.

9. The honeycomb body (1) as claimed in claim 8, **characterized in that** non-brazed regions outside the connecting points (5) are not connected to one another or are connected to one another only weakly by means of diffusion connections.

10. The honeycomb body (1) as claimed in one of claims 1 to 7, **characterized in that** the oxide coat (3) is completely or partially removed, or not applied, in partial regions (9) around connecting points (5), and diffusion connections (10) are provided in said partial regions (9).

11. The honeycomb body (1) as claimed in one of the preceding claims, **characterized in that** the honeycomb body (1) is provided with an additional coating (6) on the oxide coat (3), in particular with a so-called washcoat and/or catalytically active materials.

12. A foil (2) for producing a metallic honeycomb body (1), in particular a catalytic converter support body, **characterized in that** the foil (2) has, on its two surfaces, an oxide coat (3) with a thickness (D) between 60 and 80 nm (nanometers), preferably between 70 and 75 nm.

13. A method for producing an oxide coat with a thickness (D) of 60 to 80 nm (nanometers) on an aluminum-containing, high-temperature corrosion resistant steel foil (2), **characterized in that** the foil (2) is maintained at temperatures of between 750°C and 800°C for between 4 and 8 s (seconds), preferably approximately 6 s, in air as an ambient atmosphere.

14. A method for producing an oxide coat with a thickness (D) of 60 to 80 nm (nanometers) on an aluminum-containing, high-temperature corrosion resistant steel foil (2), **characterized in that** the foil (2) is coated with nanoparticles, preferably composed of aluminum oxide.

## Revendications

1. Corps en nids d'abeilles (1), notamment corps support de catalyseur, contenant au moins une feuille métallique (2) d'un acier résistant aux températures élevées et à la corrosion, la feuille (2) ayant au moins dans de certaines régions des points de jonction (5) et sur leurs surfaces respectivement une couche d'oxyde (3) d'une épaisseur (D) de 60 à 80 nm (nanomètres), de préférence 70 à 75 nm.

2. Corps en nids d'abeilles (1) selon la revendication 1, **caractérisé en ce que** la feuille métallique (2) consiste en un acier avec des parts de chrome et d'aluminium, notamment avec 1 à 5 % d'aluminium.

3. Corps en nids d'abeilles (1) selon la revendication 1 ou 2, **caractérisé en ce que** la couche d'oxyde (3) consiste sensiblement en oxyde d'aluminium, notamment en du γ oxyde d'aluminium.

4. Corps en nids d'abeilles (1) selon l'une des revendications précédentes, **caractérisé en ce que** la couche d'oxyde (3) a sur toutes les surfaces dans le corps en nids d'abeilles (1) une épaisseur égale (D) avec une tolérance de moins de 10 %, de préférence moins de 5 %.

5. Corps en nids d'abeilles (1) selon l'une des revendications précédentes, **caractérisé en ce que** la feuille (2) a dans au moins une direction de mesure une rugosité moyenne surfacique (Ra) de plus de 0,3 µm (micromètres).

6. Corps en nids d'abeilles (1) selon l'une des revendications précédentes, **caractérisé en ce que** la feuille (2) est une feuille laminée et a au moins en direction de laminage (L), de préférence en direction de laminage L et aussi en direction transversale (Q), transversalement à la direction de laminage, une rugosité moyenne de surface (Ra) de plus de 0,3 µm, de préférence plus de 0,5 µm, particulièrement préféré d'environ 0,6 µm.

7. Corps en nids d'abeilles (1) selon l'une des revendications précédentes, **caractérisé en ce que** la couche d'oxyde (3) consiste en de nanoparticules qui sont répartis sur les surfaces des feuilles.

8. Corps en nids d'abeilles (1) selon l'une des revendications précédentes, **caractérisé en ce que** les points de jonction (5) sont fabriqués par brasage fort, notamment par brasage dans le vide à températures élevées.

9. Corps en nids d'abeilles (1) selon la revendication 8, **caractérisé en ce que** des régions non brasées à l'extérieur des points de jonction (5) ne sont pas reliées entre elles ou uniquement que de manière faible, par des liaisons de diffusion.

10. Corps en nids d'abeilles (1) selon l'une des revendications 1 à 7, **caractérisé en ce que** dans des régions partielles (9) la couche d'oxyde (3) est rapportée totalement autour des endroits de connexion (5) ou partiellement à distance, respectivement pas du tout, et que là il y a des liaisons de diffusion (10).

11. Corps en nids d'abeilles (1) selon l'une des revendications précédentes, **caractérisé en ce que** le corps en nids d'abeilles (1) est pourvu d'un revêtement supplémentaire (6) sur les couches d'oxyde (3), notamment d'un Washcoat, ainsi nommé, et/ou de matériaux à activité catalytique.

12. Feuille (2) pour la fabrication d'un corps en nids d'abeilles métallique (1), notamment d'un corps support de catalyseur, **caractérisée en ce que** sur ses deux surfaces la feuille (2) est pourvue d'une couche d'oxyde (3) d'une épaisseur (D) entre 60 et 80 nm (nanomètres), de préférence entre 70 et 75 nm.

13. Procédé destiné à la fabrication d'une couche d'oxyde d'une épaisseur (D) de 60 à 80 nm (nanomètres) sur une feuille alumineuse en acier (2), résistante aux températures élevées et à la corrosion, **caractérisé en ce que** la feuille (2) est maintenue à l'air comme atmosphère d'environnement entre 4 et 8 s (secondes), de préférence environ 6 s, à des températures entre 750° et 800°.

14. Procédé destiné à la fabrication d'une couche d'oxyde d'une épaisseur (D) de 60 à 80 nm (nanomètres) sur une feuille alumineuse en acier (2), résistante aux températures élevées et à la corrosion, **caractérisé en ce que** la feuille (2) est revêtue de nanoparticules, de préférence d'oxyde d'aluminium.
